# EUROPEAN PATENT SPECIFICATION

(11) **EP 3 133 622 B1**
(45) Date of publication and mention of the grant of the patent: **02.05.2018**
(21) Application number: 15779327.4
(22) Date of filing: 26.03.2015
(51) Int. Cl.: H01G 9/20

(54) **PHOTOELECTRIC CONVERSION ELEMENT, DYE-SENSITIZED SOLAR CELL, AND DYE-SENSITIZED SOLAR CELL MODULE**
ELEMENT ZUR PHOTOELEKTRISCHEN UMWANDLUNG, FARBSTOFFSENSIBILISIERTE SOLARZELLE UND FARBSTOFFSENSIBILISIERTES SOLARZELLENMODUL
ÉLÉMENT DE CONVERSION PHOTOÉLECTRIQUE, PILE SOLAIRE SENSIBILISÉE PAR COLORANT ET MODULE DE PILE SOLAIRE SENSIBILISÉE PAR COLORANT

(30) Priority: 15.04.2014 JP 2014083766
(43) Date of publication of application: 22.02.2017
(73) Proprietor: Sharp Kabushiki Kaisha, Osaka 5908522 (JP)
(72) Inventor: CHIBA, Yasuo, Osaka 590-8522 (JP); YAMANAKA, Ryohsuke, Osaka 590-8522 (JP); FUKUI, Atsushi, Osaka 590-8522 (JP); KOMIYA, Ryoichi, Osaka 590-8522 (JP)
(74) Representative: Müller Hoffmann & Partner
(86) International application number: PCT/JP2015/059345
(87) International publication number: WO 2015/159677

(56) References cited:
- WO-A1-2012/086377
- WO-A1-2013/024642
- JP-A- 2000 243 465
- JP-A- 2007 200 559
- US-A1- 2012 186 644

## Description

### TECHNICAL FIELD

The present invention relates to a photoelectric conversion element, a dye-sensitized solar cell, and a dye-sensitized solar cell module.

### BACKGROUND ART

As an energy source to replace fossil fuel, a solar cell for converting solar energy into electric power energy is drawing attention. Currently, a solar cell employing a crystalline silicon substrate, a thin-film silicon solar cell, and the like are in practical use. However, for the former solar cell, manufacturing cost of the silicon substrate is high, disadvantageously. Meanwhile, since the latter thin-film silicon solar cell is manufactured using various types of gases for semiconductor manufacturing, complicated devices, and the like, manufacturing cost thereof is high, disadvantageously. For both the solar cells, these problems have not been solved yet despite continuous efforts to reduce cost per generated power output by achieving high efficiency of photoelectric conversion.

US 2012/0186644 A1 relates to flexible electrodes and a preparation method thereof, and flexible dye-sensitized solar cells using the same. More particularly, the disclosure describes a flexible photoelectrode capable of forming a semiconductor electrode with excellent photoelectric conversion efficiency on a plastic substrate at low temperatures in a simple and stable manner, in which it is prepared by forming a nanocrystalline metal oxide layer calcined at high temperature on a high temperature resistant substrate, and transferring it to a flexible transparent substrate by a transfer method using an HF solution, and a flexible dye-sensitized solar cell comprising the same.

As a new type solar cell, a solar cell has been proposed which includes a photoelectric conversion element utilizing photo-induced electron transfer in a metal complex (for example, Patent Document 1). In the photoelectric conversion element described in Patent Document 1, a photoelectric conversion layer, which is provided with an absorption spectrum in a visible light region by adsorbing a photosensitizing dye therein, and an electrolytic solution are interposed between two glass substrates, and a first electrode and a second electrode are formed on respective surfaces of the two glass substrates.

When light is emitted from the first electrode side, electrons are generated in the photoelectric conversion layer and the generated electrons are transferred from the first electrode to the opposite second electrode through an external electric circuit. The electrons thus transferred are carried by ions in the electrolyte and are then returned to the photoelectric conversion layer. With the series of electron transfers, electric energy can be extracted.

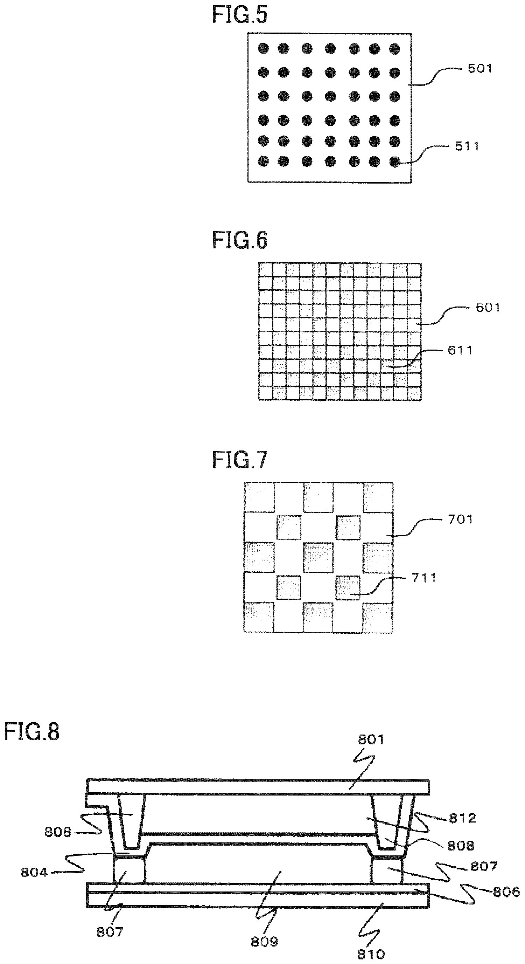

Generally, such a photoelectric conversion element used for dye-sensitized solar cells may not employ a transparent conductive film formed between a supporting body and the photoelectric conversion layer (Patent Document 2). Fig. 8 shows a conventional, exemplary photoelectric conversion element that does not employ a transparent conductive film. In the device of Fig. 8, a photoelectric conversion layer 812 having a porous semiconductor layer, a collecting electrode 804, a charge transport layer 809, a counter electrode 806, and sealing portions 807, 808 are disposed between an upper supporting body 801 and a lower supporting body 810.

In such a photoelectric conversion element employing no transparent conductive film, collecting electrode 804 is formed on the porous semiconductor layer having a dye carried thereon. Through this collecting electrode, electrons are extracted.

With such a dye-sensitized solar cell, light absorption loss by the transparent conductive film is eliminated, thus achieving an improved light transmission property permitting transmission of light from the light incidence side. Accordingly, electric energy can be extracted from the photoelectric conversion element more efficiently, thus expecting improvement in obtaining current.

Moreover, in the photoelectric conversion element employing no transparent conductive film, general glass can be used as each of the supporting bodies, thereby greatly reducing material cost of the supporting body, advantageously.

### CITATION LIST

### PATENT DOCUMENT

PTD 1: Japanese Patent Laying-Open No. H01-220380
PTD 2: Japanese Patent Laying-Open No. 2001-283941

### SUMMARY OF INVENTION

### TECHNICAL PROBLEM

In the photoelectric conversion element employing no transparent conductive film, adhesion strength in an interface between the supporting body and the porous semiconductor layer is weak, with the result that the supporting body and the porous semiconductor layer are detached from each other, disadvantageously.

If glass is used for the supporting body, the porous semiconductor layer is merely physically in intimate contact with the glass at the interface between the glass and the porous semiconductor layer, with the result that they are detached from each other due to external force such as warpage and deflection of the glass or external factors such as contact, moisture in air, and dye adsorption solvent. Particularly when no transparent conductive film is employed in production of a monolithic dye-sensitized solar cell, the porous semiconductor layer is more likely to be detached as compared with a case of producing a photoelectric conversion element employing a transparent conductive film. Accordingly, production yield of solar cells is decreased and solar cell characteristics are greatly affected, disadvantageously.

### SOLUTION TO PROBLEM

The present invention provides a photoelectric conversion element, wherein a photoelectric conversion layer, a collecting electrode, an insulating layer, and a counter electrode are disposed between an upper supporting body and a lower supporting body in this order from the upper supporting body side, the upper supporting body being located at a light incidence side and having a light transmission property, the lower supporting body being located opposite to the upper supporting body, the photoelectric conversion layer having a porous semiconductor layer, a carrier transport material being included between the upper supporting body and the lower supporting body, and an adhesion portion having a film thickness of 0.5 to 10 nm and being of one of Ti, Ta and Mo is disposed at least adjacent to and between the upper supporting body and the porous semiconductor layer.

Here, the photoelectric conversion layer may be sealed by a sealing portion, and the adhesion portion may be in contact with at least one of the sealing portion, the collecting electrode, and the counter electrode.

Moreover, a material of the adhesion portion may be one of Ti, Ta and Mo.

Moreover, the adhesion portion may have a film thickness of 0.5 to 5 nm.

Moreover, the present invention provides a dye-sensitized solar cell including the photoelectric conversion element.

Moreover, the present invention provides a dye-sensitized solar cell module formed by connecting the dye-sensitized solar cells in series.

### ADVANTAGEOUS EFFECTS OF INVENTION

According to the present invention, there can be provided: a photoelectric conversion element in accordance with claim 1 which employs no transparent conductive film and in which a porous semiconductor layer is prevented from being detached from an upper supporting body; a dye-sensitized solar cell employing the photoelectric conversion element; and a dye-sensitized solar cell module employing the dye-sensitized solar cell.

### BRIEF DESCRIPTION OF DRAWINGS

Fig. 1 is a cross sectional view showing an exemplary photoelectric conversion element of the present invention.
Fig. 2 is a cross sectional view showing another exemplary photoelectric conversion element of the present invention.
Fig. 3 is a plan view showing an exemplary adhesion portion in the photoelectric conversion element of the present invention.
Fig. 4 is a plan view showing another exemplary adhesion portion in the photoelectric conversion element of the present invention.
Fig. 5 is a plan view showing another exemplary adhesion portion in the photoelectric conversion element of the present invention.
Fig. 6 is a plan view showing another exemplary adhesion portion in the photoelectric conversion element of the present invention.
Fig. 7 is a plan view showing another exemplary adhesion portion in the photoelectric conversion element of the present invention.
Fig. 8 is a cross sectional view showing an exemplary conventional photoelectric conversion element.

### DESCRIPTION OF EMBODIMENTS

The following describes a photoelectric conversion element, a dye-sensitized solar cell and a dye-sensitized solar cell module according to the present invention with reference to figures. It should be noted that the same reference characters indicate the same or equivalent portions in the figures of the present invention. Moreover, size relations such as length, width, thickness, and depth are appropriately changed for clarity and simplification of the figures, and do not represent actual size relations.

### <Photoelectric Conversion Element>

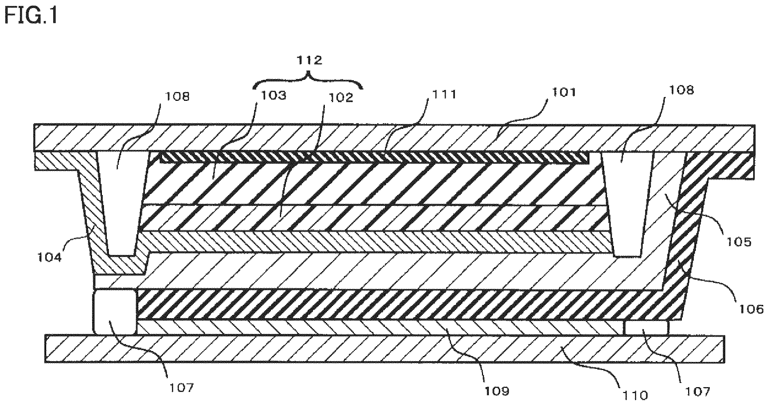

Fig. 1 is a cross sectional view showing an exemplary configuration of the photoelectric conversion element according to the present invention. In the photoelectric conversion element, a photoelectric conversion layer 112, a collecting electrode 104, an insulating layer 105, and a counter electrode 106 are disposed between an upper supporting body 101 and a lower supporting body 110 in this order from the upper supporting body 101 side, upper supporting body 101 being located at a light incidence side shown in Fig. 1 and having a light transmission property, lower supporting body 110 being located opposite to upper supporting body 101, photoelectric conversion layer 112 having a porous semiconductor layer, a carrier transport material being included between upper supporting body 101 and lower supporting body 110, and an adhesion portion 111 having a film thickness of 0.5 to 10 nm and being of one of Ti, Ta and Mo is formed at least adjacent to and between upper supporting body 101 and the porous semiconductor layer.

### (Upper Supporting Body)

A material of upper supporting body 101 is not particularly limited as long as the material is generally usable for a supporting body for photoelectric conversion elements, has a light transmission property, and can exhibit an effect of the present invention. Examples of the material of the upper supporting body may include: a glass substrate such as soda glass, fused quartz glass, or crystal quartz glass; and a flexible film composed of a heat-resistant resin material. Here, the term "light transmission property" in the present invention means that light in wavelengths with effective sensitivity for at least a below-described photosensitizer is substantially permitted to pass therethrough (transmittance for the light is not less than 80%, preferably, not less than 90%, for example). It does not necessarily mean that the light transmission property is required for light in all the wavelengths.

The thickness of the upper supporting body is not particularly limited, but is preferably 0.2 to 5 mm, for example.

### (Lower Supporting Body)

Lower supporting body 110 supports counter electrode 106. A material of the lower supporting body is not limited particularly as long as it is generally usable for photoelectric conversion elements and can exhibit an effect of the present invention. Basically, the material of the lower supporting body may or may not have a light transmission property. However, when the lower supporting body is used as a light receiving surface, the lower supporting body needs to have a light transmission property, so that the material of the lower supporting body is selected from the materials having light transmission properties and listed above in the description for the upper supporting body. When the lower supporting body does not need to have a light transmission property, the lower supporting body may be a plate or film composed of an inorganic material such as a metal or may be a plate or film composed of an organic material such as a plastic.

The thickness of the lower supporting body is not particularly limited, but is preferably 0.2 to 5 mm, for example.

### (Photoelectric Conversion Layer)

Photoelectric conversion layer 112 has the porous semiconductor layer. A photosensitizer is provided in this porous semiconductor layer. Hereinafter, explanation will be provided with regard to them sequentially.

In the present invention, the porous semiconductor layer is composed of a porous semiconductor material. Here, the porous material preferably has a specific surface area of 0.5 to 300 m²/g, and more preferably has a specific surface area of 10 to 200 m²/g. The porous material preferably has a void content of not less than 20%. The specific surface area can be determined by a BET method, which is a gas adsorption method. The void content can be determined by calculation based on thickness of the porous semiconductor layer, mass of the porous semiconductor layer, and density of the semiconductor fine particles. The porous semiconductor layer having the above specific surface area can adsorb a large amount of the photosensitizer, thus absorbing solar light efficiently. Moreover, when the void content of the porous semiconductor layer is not less than 20%, the carrier transport material can be sufficiently diffused, thereby returning electrons to the photoelectric conversion layer smoothly. It should be noted that the thickness of the porous semiconductor layer is not particularly limited but is appropriately 0.1 to 100 µm, for example.

The material of the porous semiconductor layer is not limited particularly as long as it is generally usable for photoelectric conversion elements and can exhibit an effect of the present invention. Preferable examples of such a material include compound semiconductor materials such as titanium oxide, zinc oxide, tin oxide, iron oxide, niobium oxide, cerium oxide, tungsten oxide, barium titanate, strontium titanate, cadmium sulfide, lead sulfide, zinc sulfide, indium phosphide, copper indium sulfide (CuInS₂), CuAlO₂, or SrCu₂O₂. One of the materials listed above may be used solely or two or more of the materials listed above may be used in combination. In view of photoelectric conversion efficiency, stability, and safety, it is preferable to use titanium oxide as the material of the porous semiconductor layer.

The porous material may be monocrystalline or polycrystalline. However, in view of stability, difficulty in crystal growth, and manufacturing cost, the porous semiconductor layer is preferably a polycrystalline sintered compact, and is particularly preferably a polycrystalline sintered compact constituted of fine powders (in a nano scale to a micro scale).

The porous semiconductor layer may employ particles having the same size and composed of a compound semiconductor material, or may employ particles having different sizes and composed of a compound semiconductor material. Relatively large particles, which diffuse incident light, are considered to contribute to improvement in a light collecting ratio. Relatively small particles are considered to contribute to an increased amount of adsorption of the photosensitizer because use of such relatively small particles provides a larger number of adsorption points for the photosensitizer.

It should be noted that the porous semiconductor layer of the present invention can be configured to have a two-layer structure including a porous semiconductor layer 102 and a porous semiconductor layer 103 as shown in Fig. 1. In this case, an effect of confining light can be obtained if porous semiconductor layer 102 is constituted of a semiconductor layer having a property permitting light to pass therethrough and porous semiconductor layer 103 is constituted of a semiconductor layer having a property permitting dispersion of light.

The sensitizing dye, which is adsorbed in the porous semiconductor layer and serves as the photosensitizer, is not limited particularly; however, the sensitizing dye may be any of various organic dyes that can absorb light in at least one of the visible light region and the infrared light region, or may be any of various metal complex dyes that can absorb light in at least one of the visible light region and the infrared light region. One of these dyes may be used solely or a mixture of two or more of the dyes may be used.

Examples of the organic dye include an azo-based dye, a quinone-based dye, a quinonimine-based dye, a quinacridone-based dye, a squarylium-based dye, a cyanine-based dye, a merocyanine-based dye, a triphenylmethane-based dye, a xanthene-based dye, a porphyrin-based dye, a perylene-based dye, an indigo-based dye, a naphthalocyanine-based dye, or the like. The organic dye generally has an absorptivity larger than that of a metal complex dye in which molecules are coordinated to a transition metal.

Examples of the metal complex dye include a metal complex dye in which ligands are coordinated to a metal atom such as Cu, Ni, Fe, Co, V, Sn, Si, Ti, Ge, Cr, Zn, Ru, Mg, Al, Pb, Mn, In, Mo, Y, Zr, Nb, Sb, La, W, Pt, TA, Ir, Pd, Os, Ga, Tb, Eu, Rb, Bi, Se, As, Sc, Ag, Cd, Hf, Re, Au, Ac, Tc, Te, or Rh. For example, the metal complex dye is preferably a porphyrin-based dye, a phthalocyanine-based dye, or a naphthalocyanine-based dye. Among these, the metal complex dye is more preferably a phthalocyanine-based dye or a ruthenium-based dye. The metal complex dye is further preferably a ruthenium-based metal complex dye.

The amount of adsorption of such a sensitizing dye is preferably not less than 1 × 10⁻⁸ mol/cm² and not more than 1 × 10⁻⁶ mol/cm², and is more preferably not less than 5 × 10⁻⁸ mol/cm² and not more than 5 × 10⁻⁷ mol/cm². When the amount of adsorption of the photosensitizer is less than 1 × 10⁻⁸ mol/cm², photoelectric conversion efficiency may be decreased. On the other hand, when the amount of adsorption of the photosensitizer is more than 1 × 10⁻⁶ mol/cm², open-circuit voltage may be decreased, disadvantageously.

### (Collecting Electrode)

In the present invention, collecting electrode 104 is supported by upper supporting body 101 and is in contact with photoelectric conversion layer 112. Preferably, collecting electrode 104 is provided also outside sealing portion 108, thereby smoothly connecting collecting electrode 104 to counter electrode 106 via an external electric circuit.

The material of the collecting electrode is not limited particularly as long as it has electric conductivity, and may or may not have a light transmission property. However, if the photoelectric conversion element is configured to function even when the lower supporting body is used as a light receiving surface, it needs to have a light transmission property as with the upper supporting body. Moreover, the material of the collecting electrode preferably has no corrosiveness to a below-described carrier transport material (electrolyte or the like). Specifically, examples of the material of the collecting electrode include indium tin complex oxide (ITO), tin oxide (SnO₂), tin oxide doped with fluorine (FTO), zinc oxide (ZnO), or the like. Also, a metal not corrosive to a material used for the carrier transport material can be used, such as titanium, nickel, or tantalum.

The thickness of the collecting electrode is not particularly limited but is preferably 0.02 to 50 µm, for example. A smaller sheet resistance value of the collecting electrode is more preferable because FF (fill factor) can be improved, and the sheet resistance value of the collecting electrode is particularly preferably not more than 40 Ω/□.

If the collecting electrode has a dense structure, a plurality of small pores are preferably formed in the collecting electrode. Here, the plurality of small pores serve as a path for the carrier transport material. In other words, the carrier transport material included in the below-described charge transport layer can be moved between the porous semiconductor layer of the photoelectric conversion layer and the counter electrode through the plurality of small pores formed in the collecting electrode.

### (Insulating Layer)

Insulating layer 105 has a function of insulating between collecting electrode 104 and counter electrode 106. A material of insulating layer 105 is not particularly limited as long as it can insulate between collecting electrode 104 and counter electrode 106. Examples of the material usable for the insulating layer include at least one selected from a group consisting of titanium oxide, niobium oxide, zirconium oxide, silicon oxide, aluminum oxide, and barium titanate.

Insulating layer 105 is preferably composed of a material having a conductivity of not more than 1 × 10¹² Ω·cm. Because insulating layer 105 is composed of the material having such a low conductivity, leakage current from photoelectric conversion layer 112 to counter electrode 106 can be reduced.

Insulating layer 105 preferably has a thickness of not less than 0.2 µm and not more than 5 µm, more preferably, not less than 0.5 µm and not more than 2 µm. When the thickness of insulating layer 105 is not less than 0.2 µm, particularly, not less than 0.5 µm, leakage current from photoelectric conversion layer 112 to counter electrode 106 tends to be reduced. Moreover, when the thickness of insulating layer 105 is not more than 5 µm, particularly, not more than 2 µm, resistance of the carrier transport layer tends to be decreased and FF tends to be improved.

### (Counter Electrode)

Counter electrode 106 is provided on lower supporting body 110 and is in contact with the charge transport layer. The counter electrode is an electrode opposite to collecting electrode 104.

A material of the counter electrode is not particularly limited as long as it is generally usable for collecting electrodes and can exhibit an effect of the present invention. However, in order to function the photoelectric conversion element even when the lower supporting body is used as a light receiving surface, a material having a light transmission property needs to be used therefor.

The counter electrode is preferably a stacking structure of a catalyst layer and an electrically conductive layer. Here, the catalyst layer is preferably provided between the charge transport layer and the electrically conductive layer, preferably has a function to activate an oxidation/reduction reaction of the electrolyte, and is preferably composed of platinum, carbon black, Ketchen black, carbon nanotube, fulleren, or the like, for example. It should be noted that when the catalyst layer thus has electric conductivity, the counter electrode may be only constituted of the catalyst layer. The thickness of the counter electrode is not particularly limited, but is appropriately 0.5 to 1000 nm, for example.

### (Charge Transport Layer)

In the present invention, charge transport layer 109 is provided by filling a portion between counter electrode 106 and lower supporting body 110 with the carrier transport material.

### (Carrier Transport Material)

The carrier transport material is a material with which charge transport layer 109 is filled. Preferably, the carrier transport material is composed of an electrically conductive material that can transport ions. Examples of the material suitable for the carrier transport material include a liquid electrolyte, a solid electrolyte, a gel electrolyte, a molten salt gel electrolyte, or the like.

A specific example of the carrier transport material is an electrolyte in which a redox species is dissolved in a solvent. Examples of the redox species include an I-/I³⁻based redox species, a Br²⁻/Br³⁻ based redox species, a Fe²⁺/Fe³⁺ based redox species, a quinone/hydroquinone based redox species, or the like. Examples of the redox species include a combination of iodine (I₂) and a metal iodide such as lithium iodide (LiI), sodium iodide (NaI), potassium iodide (KI), or calcium iodide (CaI₂). Moreover, examples of the redox species include a combination of iodine and a tetraalkylammonium salt such as tetraethylammonium iodide (TEAI), tetrapropylammonium iodide (TPAI), tetrabutylammonium iodide (TBAI), or tetrahexylammonium iodide (THAI). Furthermore, examples of the redox species include a combination of bromine and a metal bromide such as lithium bromide (LiBr), sodium bromide (NaBr), potassium bromide (KBr), or calcium bromide (CaBr₂). Among these, it is particularly preferable to use a combination of LiI and I₂ as the redox species.

Examples of the solvent in which the redox species can be dissolved include: a carbonate compound such as propylene carbonate; a nitrile compound such as acetonitrile; an alcohol such as ethanol; water; an aprotic polar substance; or the like. Among these, as the solvent in which the redox species can be dissolved, it is particularly preferable to use the carbonate compound or the nitrile compound. For the solvent in which the redox species can be dissolved, one of them may be used solely or two of them may be used in combination.

### (Adhesion Portion)

In the present invention, adhesion portion 111 is formed adjacent to and between upper supporting body 101 and the porous semiconductor layer. For example, if glass is used as the supporting body in the dye-sensitized solar cell employing no transparent conductive film, the porous semiconductor layer and the supporting body are likely to be detached from each other at an interface between the porous semiconductor layer and the supporting body due to warpage of the glass or the like when forming the porous semiconductor layer. For this reason, the adhesion portion is formed to suppress such detachment.
In order to facilitate formation of the adhesion portion, a refractory metal such as Ti, Ta, or Mo is used.

When Ti is used for the material of the adhesion portion, an appropriate degree of irregularities are formed in the surface of the adhesion portion by particles included in the adhesion portion. Accordingly, a surface area of the adhesion portion is increased and a contact area between the adhesion portion and the upper supporting layer is also increased. This makes it difficult to detach the upper supporting body and the adhesion portion from each other. Moreover, in the step of producing the photoelectric conversion element, for example, the adhesion portion can be formed after baking the porous semiconductor layer. In this case, the adhesion portion and the baked porous semiconductor layer are chemically bound to each other. With this chemical bond, the porous semiconductor layer and the adhesion portion are less likely to be detached from each other.

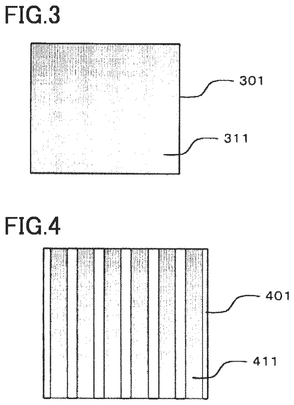

Each of Fig. 3 to Fig. 7 is a plan view showing an exemplary configuration of the adhesion portion in the photoelectric conversion element of the present invention. Regarding a relation of the adhesion portion with the surface of the upper supporting body, the adhesion portion may be formed on the entire surface of the upper supporting body as shown in Fig. 3, may be formed in the form of stripes as shown in Fig. 4, may be formed in the form of dots as shown in Fig. 5, or may be formed in the form of a lattice as shown in Fig. 6 and Fig. 7. However, at the portion having the adhesion portion formed therein, the porous semiconductor layer and the upper supporting body are adhered to each other, so that the adhesion portion is more preferably formed on the entire surface of the upper supporting body as shown in Fig. 3.

When the film thickness of the adhesion portion is 0.5 to 10 nm, it is possible to secure a thickness sufficient to maintain adhesion between the upper supporting body and the porous semiconductor layer. If the film thickness is not more than 0.5 nm, it becomes difficult to control deposition of the material of the adhesion portion in the process of depositing the material of the adhesion portion. The film thickness of 0.5 to 5 nm is preferable because a light transmission property permitting transmission of light to the porous semiconductor layer through the supporting body can be secured. The fine thickness is more preferably 0.5 to 2 nm. It should be noted that when the thickness of the adhesion portion is not constant, the term "film thickness" means the maximum thickness of the adhesion portion.

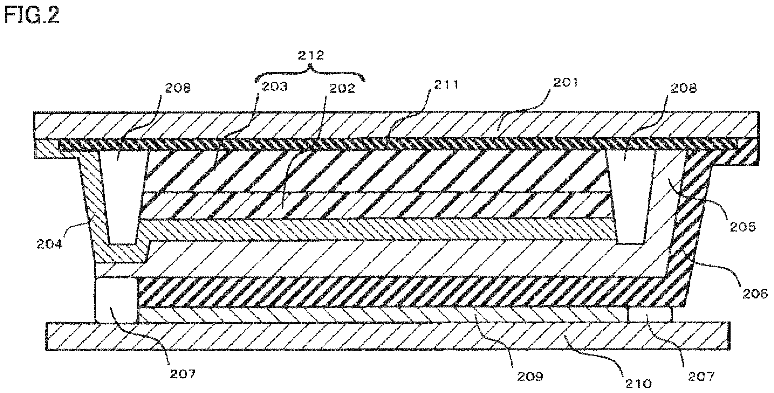

The adhesion portion may be configured in any manner as long as it adheres the upper supporting body to the porous semiconductor layer as shown in Fig. 1, and the adhesion portion may be in contact with any one of a sealing portion 208, a collecting electrode 204, an insulating layer 205, and a counter electrode 206 as shown in Fig. 2. When adhesion portion 211 is in contact with at least one of the sealing portion, the collecting electrode, the insulating layer, and the counter electrode, detachment is prevented at its portion in contact with the porous semiconductor layer and the porous semiconductor layer is less likely to be detached from the upper supporting body.

### (Sealing Portions)

Sealing portions 107, 108 hold upper supporting body 101 and lower supporting body 110, have a leakage prevention function for charge transport layer 109, have a function of absorbing an impact from a falling object or stress (impact), and have a function of absorbing deflection exerted on each of the upper supporting body and the lower supporting body in a long-term use.

A material of the sealing portion is not particularly limited as long as it is generally usable for the photoelectric conversion element and can exhibit the above-described functions. Examples of such a material include an ultraviolet curing resin, a thermosetting resin, or the like. Specific examples thereof include a silicone resin, an epoxy resin, a polyisobutylene-based resin, a hot melt resin, or a glass frit. The sealing portion may be formed by using one of them solely or by layering two or more of these materials.

### (Method for Manufacturing Photoelectric Conversion Element)

In a method for manufacturing the photoelectric conversion element of the present invention, adhesion portion 111 is first formed on one surface of upper supporting body 101. Various metals can be used for the adhesion portion as long as it adheres the upper supporting body to the porous semiconductor layer; however, in order to improve adhesion between the upper supporting body and the porous semiconductor layer in the produced photoelectric conversion element, the adhesion portion is composed of a refractory metal such as Ti, Ta, or Mo and is more preferably composed of Ti.

For the formation of the adhesion portion, various deposition methods can be selected such as an evaporation method, a sputtering method, a CVD method, a molecular beam epitaxial method, and a spin coat method.

In the case of partially forming an adhesion portion having a certain pattern as shown in Fig. 4 to Fig. 7 instead of forming the adhesion portion on the entire surface of the upper supporting body as shown in Fig. 3, patterning can be performed selectively by using a mask in the above-described deposition methods. By forming the adhesion portion in accordance with such a method, pattern formation can be performed.

Photoelectric conversion layer 112 can be formed by first forming the porous semiconductor layer on the surface of upper supporting body 101 having adhesion portion 111 formed thereon, and then adsorbing the photosensitizer therein, for example.

The porous semiconductor layer is formed by any method such as a known method. For example, the porous semiconductor layer can be formed by applying, onto the upper supporting body having the adhesion portion formed thereon, a suspension containing particles composed of a compound semiconductor, and then performing baking and drying. In this method, first, the suspension is obtained by suspending, in an appropriate solvent, the particles composed of the compound semiconductor. Examples of such a solvent include: a glyme-based solvent such as ethylene glycol monomethyl ether; an alcohol such as isopropyl alcohol; an alcohol-based mixed solvent such as isopropyl alcohol/toluene; or water. Moreover, instead of such a suspension, a commercially available titanium oxide paste (for example, Ti-nanoxide, T, D, T/SP, D/SP, R/SP provided by Solaronix) may be used.

Next, in accordance with a known method such as a doctor blade method, a squeegee method, a spin coat method, or a screen printing method, the obtained suspension is applied onto the upper supporting body having the adhesion portion formed thereon, and then baking and drying are performed to form the porous semiconductor layer.

Temperature, time, atmosphere, and the like necessary for the baking and drying can be set appropriately depending on a type of material to constitute the porous semiconductor layer. For example, the atmosphere is an atmospheric air or an inert gas or oxygen gas atmosphere. The temperature and time may be set to fall within such ranges that the maximum temperature is the softening point of the supporting body to be used. When glass is used as the supporting body, the temperature is set to fall within a range of about 150 to 600°C, and is more preferably set to fall within a range of about 350 to 550°C, and the time is set to fall within a range of about 10 seconds to 12 hours. The baking and drying may be performed once at one temperature or may be performed twice or more at different temperatures.

When the porous semiconductor layer includes a plurality of layers, it is preferable to prepare suspensions including particles composed of different compound semiconductors, and to repeatedly perform application of the prepared suspensions and baking and drying twice or more.

The photosensitizer is adsorbed in the porous semiconductor layer by, for example, a method of adsorbing the photosensitizer into the porous semiconductor layer using a dye adsorption solution having the photosensitizer dissolved therein. First, the photosensitizer to be used is dissolved in a solvent, thereby obtaining the dye adsorption solution. The solvent is not limited particularly as long as the photosensitizer to be used can be dissolved therein and the solvent can be generally used as a solvent for a photosensitizer in production of photoelectric conversion elements. Then, the porous semiconductor layer is immersed in the dye adsorption solution, thereby adsorbing the photosensitizer in the porous semiconductor layer. Although conditions of the immersion are not particularly limited as long as a general method is employed to sufficiently adsorb the photosensitizer, the immersion can be performed under a temperature condition of 40°C for 20 hours, for example. After the immersion, the obtained stacking structure may be washed by ethanol or the like appropriately.

Collecting electrode 104 can be formed by any method but is preferably formed by: various deposition methods such as the evaporation method, the sputtering method, the CVD method, the molecular beam epitaxial method, and the spin coat method; or a known method such as the spray method.

Although the method for forming insulating layer 105 is not particularly limited, insulating layer 105 can be formed by a method appropriately selected from methods by which a material suitable for insulating layer 105 can be formed into a layer, such as the screen printing method or the doctor blade method.

The method for forming counter electrode 106 is not particularly limited as with the method for forming collecting electrode 104. When platinum is used for the counter electrode, the counter electrode can be formed by a known method such as the sputtering method, thermal decomposition of platinic chloride, or electrodeposition.

When carbon, such as carbon black, Ketchen black, carbon nanotube, or fulleren, is used as the material of the counter electrode, the counter electrode can be formed by applying, onto the insulating layer by the screen printing method or the like, carbon formed into paste by dispersing it in a solvent.

Lower supporting body 110 is attached by bonding the counter electrode to the lower supporting body with sealing portion 107 interposed therebetween.

At least charge transport layer 109 is filled with the carrier transport material. The method of filling with the carrier transport material is not particularly limited. For example, the following method can be employed: the counter electrode is bonded to the lower supporting body, then the carrier transport material is introduced from through holes formed in advance in the upper supporting body or the counter electrode and the lower supporting body, and then the through holes are sealed.

With the above method, there can be provided the dye-sensitized solar cell in which the porous semiconductor layer is prevented from being detached from the upper supporting body.

### <Dye-Sensitized Solar Cell>

The dye-sensitized solar cell according to the present invention is a dye-sensitized solar cell including: an electrode including the photoelectric conversion element according to the present invention; an opposite electrode; and a carrier transport layer provided between the electrode including the photoelectric conversion element according to the present invention and the opposite electrode, wherein the collecting electrode and the counter electrode in the photoelectric conversion element are connected to each other via the external electric circuit. Thus, there can be provided the dye-sensitized solar cell in which the porous semiconductor layer is prevented from being detached from the upper supporting body.

### <Dye-Sensitized Solar Cell Module>

The dye-sensitized solar cell module according to the present invention is formed by connecting the dye-sensitized solar cells according to the present invention in series. Thus, there can be provided the dye-sensitized solar cell module in which the porous semiconductor layer is prevented from being detached from the upper supporting body.

### [Examples]

### <Example 1>

A photoelectric conversion element was prepared which had the same structure as that of the photoelectric conversion element of Fig. 2 except that only one porous semiconductor layer was included in the photoelectric conversion layer. The photoelectric conversion element of Example 1 includes: an upper supporting body constituted of a glass substrate; a porous semiconductor layer composed of sintered TiO₂; and an adhesion portion that is formed on the entire surface of the upper supporting body, that is composed of Ti, and that has a uniform film thickness of 2 nm.

The photoelectric conversion element was manufactured by the following method: the glass substrate was first prepared as the upper supporting body and then the evaporation method was employed to deposit Ti (trademark "titanium φ1.0x3.0mm 99.5%" provided by Nilaco Corporation) at an uniform film thickness of 2 nm on the entire surface of the upper supporting body as the material of the adhesion portion as shown in Fig. 3.

Sealing portions were formed on the surface of the upper supporting body, on which the material of the adhesion portion had been deposited, around a portion to be provided with the porous semiconductor layer. Then, the screen printing method was employed to apply a TiO₂ paste (a mixture obtained by mixing trademark " Ti-Nanoxide T/SP" and trademark "Ti-Nanoxide R/SP" at a weight ratio of 6:4; provided by Solaronix) on the deposited material of the adhesion portion as a raw material of the porous semiconductor layer to have a longitudinal side of 5 mm, a lateral side of 5 mm, and a film thickness of 25 µm.

The obtained film was dried at 120°C for 20 minutes and was baked at 500°C for 1 hour, thereby obtaining a porous semiconductor layer composed of TiO₂.

Specifically, a metal mask having an opening with 6 mm in width × 10 mm in length was prepared. Then, the metal mask was placed to expose the surface of the semiconductor layer through the opening of the metal mask. Then, an electron beam evaporator (trademark "ei-5" provided by Ulvac, Inc.) was employed to form a collecting electrode composed of titanium and having a thickness of 600 nm under conditions that titanium was set as a target and the evaporation rate was set at 10 nm/s.

Next, a paste including insulating particles to constitute the insulating layer (zirconium oxide particles (provided by Sigma-Aldrich)) was dispersed in terpineol and was mixed with ethyl cellulose, thereby preparing a paste. The zirconium oxide particles, the terpineol, and the ethyl cellulose, whose weight ratio was 65:30:5, were applied to cover the surface of the collecting electrode, the surface of the sealing portion, and the surface of the upper supporting body. Then, pre-drying was performed for 20 minutes at 120°C, and baking was then performed at 500°C for 1 hour, thereby forming an insulating layer.

Next, a counter electrode composed of platinum was formed using a metal mask having an opening with 6 mm in width × 10 mm in length and using an electron beam evaporator (trademark "ei-5" provided by the Ulvac, Inc.), under conditions that platinum was set as a target and an evaporation rate was set at 5 nm/s.

Next, a dye (trademark "Ruthenium620-1H3TBA" provided by Solaronix) was dissolved in a mixed solvent (volume ratio of 1:1) of acetonitrile (provided by Aldrich Chemical Company) and t-butyl alcohol (provided by Aldrich Chemical Company) to achieve a concentration of 4 × 10⁻⁴ mol/liter, thereby obtaining a dye adsorption solution. Then, the dye was adsorbed in the porous semiconductor layer by immersing the porous semiconductor layer in the dye adsorption solution under a temperature condition of 40°C for 20 hours from the insulating layer side via the small pores of the collecting electrode. Then, ethanol (provided by Aldrich Chemical Company) was used to wash the porous semiconductor layer, and the porous semiconductor layer was then dried at about 80°C for about 10 minutes. In this way, a photoelectric conversion layer having a thickness of 25 µm was formed.

Next, an ultraviolet curing agent (trademark "31X-101" provided by ThreeBond Co., Ltd.) was applied onto a surface of a glass substrate (trademark "7059" provided by Corning, Inc.) serving as the lower supporting body. Then, the side of the upper supporting body on which the sealing portions were placed was placed on the ultraviolet curing agent applied on the surface of the lower supporting body. Then, ultraviolet rays were emitted to the ultraviolet curing agent. Accordingly, the upper supporting body and the lower supporting body were joined to each other.

Next, in acetonitrile serving as a solvent, LiI (redox species; provided by Aldrich Chemical Company) was dissolved to achieve a concentration of 0.1 mol/liter and 12 (provided by Tokyo Chemical Industry Co., Ltd.) was dissolved as a redox species to achieve a concentration of 0.01 mol/liter. Furthermore, in the acetonitrile, t-butylpyridine (TBP (4-tert-butylpyridine)) (provided by Aldrich Chemical Company) was dissolved as an additive agent to achieve a concentration of 0.5 mol/liter and dimethylpropylimidazole iodide (DMPII) (provided by Shikoku Chemicals Corporation) was dissolved to achieve a concentration of 0.6 mol/liter. In this way, a carrier transport material constituted of the liquid electrolyte was produced.

Finally, the carrier transport material was introduced from an introduction opening provided in the lower supporting body in advance, and the introduction opening was sealed using an ultraviolet curing resin (trademark "31X-101 229" provided by ThreeBond Co., Ltd.). Accordingly, a dye-sensitized solar cell of Example 1 was completed.

### <Example 2>

A photoelectric conversion element of Example 2 was produced in accordance with the same method as that of Example 1 except that the adhesion portion was set to have a film thickness of 5 nm.

### <Example 3>

A photoelectric conversion element of Example 3 was produced in accordance with the same method as that of Example 1 except that the adhesion portion was set to have a film thickness of 0.5 nm.

### <Example 4>

A photoelectric conversion element of Example 4 was produced in accordance with the same method as that of Example 1 except that the adhesion portion was set to have a film thickness of 4 nm.

### <Example 5>

A photoelectric conversion element of Example 5 was produced in accordance with the same method as that of Example 1 except that the adhesion portion was set to have a film thickness of 10 nm.

### <Example 6>

A photoelectric conversion element of Example 6 was produced in accordance with the same method as that of Example 1 except that the material of the adhesion portion was Ta.

### <Example 7>

A photoelectric conversion element of Example 7 was produced in accordance with the same method as that of Example 1 except that the material of the adhesion portion was Mo.

### <Example 8>

A photoelectric conversion element of Example 8 was produced in accordance with the same method as that of Example 1 except that TiO₂ paste (trademark "Ti-NanoxideD/SP" provided by Solaronix) was used as the raw material of the porous semiconductor layer.

### <Example 9>

A photoelectric conversion element of Example 9 was produced in accordance with the same method as that of Example 1 except that the photoelectric conversion layer was constituted of two porous semiconductor layers (total thickness of 25 µm) including (i) an upper supporting body side layer (film thickness of 17 µm) made from TiO₂ paste (trademark " Ti-Nanoxide T/SP" provided by Solaronix) and (ii) a collecting electrode side layer (film thickness of 8 µm) made from TiO₂ paste (trademark " Ti-Nanoxide R/SP" provided by Solaronix).

### <Comparative Example 1>

A photoelectric conversion element of a Comparative Example 1 was produced in accordance with the same method as that of Example 1 except that no adhesion portion was formed.

### <Comparative Example 2>

A photoelectric conversion element of Comparative Example 2 was produced in accordance with the same method as that of Example 1 except that the adhesion portion was set to have a film thickness of 0.2 nm.

### <Comparative Example 3>

A photoelectric conversion element of Comparative Example 3 was produced in accordance with the same method as that of Example 1 except that the adhesion portion was set to have a film thickness of 15 nm.

### <Evaluation Methods>

The photoelectric conversion elements obtained in Examples 1 to 9 and Comparative Examples 1 to 3 were evaluated by the following methods in terms of detachment, short circuit current density, and photoelectric conversion efficiency.

### (1) Detachment

It was checked whether or not film detachment was visually observed immediately after completing each photoelectric conversion element. Particularly, when crack, raised portion or chipped portion was observed in the porous semiconductor layer, it was evaluated as "film detachment".

### (2) Short Circuit Current Density and Photoelectric Conversion Efficiency

A solar simulator (trademark "AMI.5 solar simulator" provided by Wacom Electric Co., Ltd.) was employed to emit light having an intensity of 1 kW/m² to the obtained photoelectric conversion element in order to measure short circuit current density (mA/cm²) and photoelectric conversion efficiency (%).

It should be noted that in the photoelectric conversion elements obtained in Comparative Examples 1 and 2, the porous semiconductor layers were detached (Table 1). Therefore, each of the photoelectric conversion elements obtained in Comparative Examples 1 and 2 was essentially unsuitable for evaluating electric properties; however, the detached portion was relatively small, so that the short circuit current density and photoelectric conversion efficiency could be evaluated. Hence, the short circuit current density and photoelectric conversion efficiency of each of Comparative Examples 1 and 2 were also evaluated as with those of Examples 1 to 9 and Comparative Example 3.

### <Evaluation Results>

Table 1 shows evaluation results of the detachment, short circuit current density, and photoelectric conversion efficiency of the photoelectric conversion elements obtained in Examples 1 to 9 and Comparative Examples 1 to 3.

**[Table 1]**

| | Film Thickness of Adhesion Portion (nm) | Structure of Adhesion Portion | Structure of Porous Semiconductor Layer | Material of Porous Semiconductor Layer | Detachment of Porous Semiconductor Layer | Short Circuit Current Density (mA/cm²) | Photoelectric Conversion Efficiency (%) |
|---|---|---|---|---|---|---|---|
| Example 1 | 2 | Ti | One Layer | titanium oxide (provided by Solaronix; mixture of T/SP and R/SP used) | Not Detached | 19.1 | 9.1 |
| Example 2 | 5 | Ti | One Layer | titanium oxide (provided by Solaronix; mixture of T/SP and R/SP used) | Not Detached | 18.9 | 9.0 |
| Example 3 | 0.5 | Ti | One Layer | titanium oxide (provided by Solaronix; mixture of T/SP and R/SP used) | Not Detached | 19.3 | 9.3 |
| Example 4 | 4 | Ti | One Layer | titanium oxide (provided by Solaronix; mixture of T/SP and R/SP used) | Not Detached | 19.0 | 9.0 |
| Example 5 | ¹0 | Ti | One Layer | titanium oxide (provided by Solaronix; mixture of T/SP and R/SP used) | Not Detached | 15.0 | 6.2 |
| Example 6 | 2 | Ta | One Layer | titanium oxide (provided by Solaronix; mixture of T/SP and R/SP used) | Not Detached | 18.9 | 9.0 |
| Example 7 | 2 | Mo | One Layer | titanium oxide (provided by Solaronix; mixture of T/SP and R/SP used) | Not Detached | 18.9 | 9.0 |
| Example 8 | 2 | Ti | One Layer | titanium oxide (provided by Solaronix; D/SP used) | Not Detached | 18.9 | 9.0 |
| Example 9 | 2 | Ti | Two Layers | Upper Supporting Body Side: titanium oxide (provided by Solaronix; T/SP used) | Not Detached | 19.5 | 9.5 |
| | | | | Collecting Electrode Side: titanium oxide (provided by Solaronix; R/SP used) | | | |
| Comparative Example 1 | - | Ti | One Layer | titanium oxide (provided by Solaronix; mixture of T/SP and R/SP used) | Detached | 19.3 | 9.3 |
| Comparative Example 2 | 0.2 | Ti | One Layer | titanium oxide (provided by Solaronix; mixture of T/SP and R/SP used) | Detached | 19.3 | 9.2 |
| Comparative Example 3 | 15 | Ti | One Layer | titanium oxide (provided by Solaronix; mixture of T/SP and R/SP used) | Not Detached | 13.0 | 5.4 |

### (1) Detachment

No detachment was observed in Examples 1 to 9 having the adhesion portions having film thicknesses of 0.5 to 10 nm, whereas detachment was observed in Comparative Example 1 having no adhesion portion and Comparative Example 2 having the adhesion portion having a film thickness of less than 0.5 nm (Table 1). Thus, in Examples 1 to 9, the photoelectric conversion elements could be produced stably with good reproducibility, whereas in Comparative Examples 1 and 2, the photoelectric conversion elements could not be produced stably due to the detachment. As described above, since each of the photoelectric conversion elements of the present invention included the adhesion portion of the present invention, the detachment could be suppressed effectively irrespective of a difference in the adhesion portion or the porous semiconductor layer, whereby the photoelectric conversion elements could be produced stably with good yield.

### (2) Short Circuit Current Density and Photoelectric Conversion Efficiency

In each of Examples 1 to 9 having the adhesion portions having film thicknesses of 0.5 to 10 nm, the short circuit current density exhibited a value of 15.0 to 19.5 mA/cm², and the photoelectric conversion efficiency exhibited a value of 6.2 to 9.5%. On the other hand, in Comparative Example 3 having the adhesion portion having a film thickness of 15 nm, the short circuit current density was 13 mA/cm² and the photoelectric conversion efficiency was 5.9%, both of which were numerical values lower than those of the Examples. Thus, it was revealed that when the film thickness of the adhesion portion is 0.5 to 10 nm, the electric property of the photoelectric conversion element becomes sufficient.

Moreover, in Examples 1 to 4 and Examples 6 to 9 having the adhesion portions having film thicknesses of 0.5 to 5 nm, the short circuit current density exhibited a value of 18.9 to 19.3 mA/cm² and the photoelectric conversion efficiency exhibited a value of 9.0 to 9.3%. On the other hand, in Example 5 having the adhesion portion having a film thickness of 10 nm, the short circuit current density was 15.0 mA/cm² and the photoelectric conversion efficiency was 6.2%, both of which were numerical values lower than those of the other Examples. Thus, it was revealed that when the film thickness of the adhesion portion is 0.5 to 5 nm, the electric property of the photoelectric conversion element becomes more excellent and preferable.

### REFERENCE SIGNS LIST

101, 201, 301, 401, 501, 601, 701, 801: upper supporting body; 102, 103, 202, 203: porous semiconductor layer; 104, 204, 804: collecting electrode; 105, 205: insulating layer; 106, 206, 806: counter electrode; 107, 108, 207, 208, 807, 808: sealing portion; 109, 209, 809: charge transport layer; 110, 210, 810: lower supporting body; 111, 211, 311, 411, 511, 611, 711: adhesion portion; 112, 212, 812: photoelectric conversion layer.

## Claims

1. A photoelectric conversion element, wherein
a photoelectric conversion layer (112), a collecting electrode (104), an insulating layer (105), and a counter electrode (106) are disposed between an upper supporting body (101) and a lower supporting body (110) in this order from the upper supporting body side, the upper supporting body (101) being located at a light incidence side and having a light transmission property, the lower supporting body (110) being located opposite to the upper supporting body (101), the photoelectric conversion layer (112) having a porous semiconductor layer (102, 103), a carrier transport material being included between the upper supporting body (101) and the lower supporting body (110), and
an adhesion portion (111) having a film thickness of 0.5 to 10 nm is disposed adjacent to and between the upper supporting body (101) and the porous semiconductor layer (103), wherein a material of the adhesion portion (111) is one of Ti, Ta and Mo.

2. The photoelectric conversion element according to claim 1, wherein
the photoelectric conversion layer (112) is sealed by a sealing portion (107,108), and
the adhesion portion (111) is in contact with at least one of the sealing portion (107,108), the collecting electrode (104), and the counter electrode (106).

3. A dye-sensitized solar cell comprising the photoelectric conversion element recited in any one of claims 1 to 2.

4. A dye-sensitized solar cell module formed by connecting a plurality of the dye-sensitized solar cells recited in claim 3 in series.

## Patentansprüche

1. Element zur photoelektrischen Umwandlung, wobei
eine Schicht (112) zur photoelektrischen Umwandlung, eine Sammelelektrode (104), eine Isolierschicht (105) und eine Gegenelektrode (106) zwischen einem oberen tragenden Körper (101) und einem unteren tragenden Körper (110) in dieser Reihenfolge von der Seite des oberen tragenden Körpers aus angeordnet sind, wobei der obere tragende Körper (101) an einer Lichteinfallsseite gelegen ist und eine Lichtdurchlässigkeitseigenschaft aufweist, der untere tragende Körper (110) dem oberen tragenden Körper (101) gegenüberliegt, die Schicht (112) zur photoelektrischen Umwandlung eine poröse Halbleiterschicht (102, 103) aufweist, ein Trägertransportmaterial zwischen dem oberen tragenden Körper (101) und dem unteren tragenden Körper (110) enthalten ist, und
ein Adhäsionsteil (111) mit einer Filmdicke von 0,5 bis 10 nm dem oberen tragenden Körper (101) benachbart und zwischen diesem und der porösen Halbleiterschicht (103) angeordnet ist, wobei ein Material des Adhäsionsteils (111) eines von Ti, Ta und Mo ist.

2. Element zur photoelektrischen Umwandlung nach Anspruch 1, wobei
die Schicht (112) zur photoelektrischen Umwandlung durch einen Dichtungsteil (107, 108) abgedichtet ist, und
der Adhäsionsteil (111) mit zumindest einem des Dichtungsteils (107, 108), der Sammelelektrode (104) und der Gegenelektrode (106) in Kontakt steht.

3. Farbstoffsensibilisierte Solarzelle, umfassend das Element zur photoelektrischen Umwandlung nach einem der Ansprüche 1 bis 2.

4. Farbstoffsensibilisiertes Solarzellenmodul, das gebildet wird, indem eine Vielzahl der farbstoffsensibilisierten Solarzellen nach Anspruch 3 in Reihe verbunden werden.

## Revendications

1. Elément de conversion photoélectrique, dans lequel
une couche de conversion photoélectrique (112), une électrode collectrice (104), une couche isolante (105) et une contre-électrode (106) sont disposées entre un corps de support supérieur (101) et un corps de support inférieur (110), dans cet ordre à partir du côté du corps de support supérieur, le corps de support supérieur (101) se trouvant sur un côté d'incidence de lumière et présentant une propriété de transmission de la lumière, le corps de support inférieur (110) se trouvant à l'opposé du corps de support supérieur (101), la couche de conversion photoélectrique (112) comportant une couche semi-conductrice poreuse (102, 103), un matériau de transport porteur étant compris entre le corps de support supérieur (101) et le corps de support inférieur (110), et
une partie d'adhérence (111) qui présente une épaisseur de film de 0,5 à 10 nm est disposée près de et entre le corps de support supérieur (101) et la couche semi-conductrice poreuse (103), un matériau de la partie d'adhérence (111) étant Ti ou Ta ou Mo.

2. Elément de conversion photoélectrique selon la revendication 1, dans lequel
la couche de conversion photoélectrique (112) est scellée par une partie de scellement (107, 108), et
la partie d'adhérence (111) est en contact avec la partie de scellement (107, 108) et/ou l'électrode collectrice (104) et/ou la contre-électrode (106).

3. Pile solaire à pigment photosensible comprenant l'élément de conversion photoélectrique présenté dans l'une quelconque des revendications 1 à 2.

4. Module de piles solaires à pigment photosensible, formé en reliant en série plusieurs piles solaires à pigment photosensible présentées dans la revendication 3.
